Europäisches Patentamt

European Patent Office

Office européen des brevets

(19)

(11) Publication number: **0 159 698**
A2

# (12) EUROPEAN PATENT APPLICATION

(21) Application number: 85104933.8

(22) Date of filing: 23.04.85

(51) Int. Cl.⁴: **B 01 D 53/04,** A 62 B 19/00

(30) Priority: 27.04.84 US 604831

(43) Date of publication of application: 30.10.85
Bulletin 85/44

(84) Designated Contracting States: CH DE FR IT LI NL SE

(71) Applicant: PALL CORPORATION, 30 Sea Cliff Avenue,
Glen Cove New York 11542 (US)

(72) Inventor: Miller, John David, 241 Merrill Road, Homer
New York 13077 (US)
Inventor: Reed, Clayton Lewis, 348 Nye Road, R.D. 3,
Cortland New York 13045 (US)

(74) Representative: Brehm, Hans-Peter, Dr. Dipl.-Chem. et
al, Patentanwälte Tischer, Kern & Brehm
Albert-Rosshaupter-Strasse 65, D-8000 München 70 (DE)

(54) Gas mask canister.

(57) A filter canister for removing undesirable substances
from a breathable gas comprises a cylindrical housing hav-
ing a gas inlet, a gas outlet and a gas flow path between
them. The filter canister also comprises first and second cy-
lindrical filter assemblies disposed in the housing in the gas
flow path with the first filter assembly disposed upstream
from the second filter assembly. The first filter assembly
has an annular cross section and includes a porous means
for removing particles from the gas. The second filter as-
sembly is disposed coaxially to the first filter assembly and
includes a sorbent-containing means for removing vaporous chemical contaminants from the gas. The filter canister
further comprises a structure for directing the gas flow radially through the first filter assembly and axially through
the second filter assembly.

0159698

# GAS MASK CANISTER

## Technical Field:

The present invention relates to respiratory devices. In particular, it relates to filter canisters for use in conjunction with face masks to protect against highly toxic airborne contaminants.

## Background Art:

In a variety of industrial and possible military settings, a person may be exposed to highly toxic airborne contaminants, including particulate, aerosol and vaporous chemical contaminants. To prevent inhaling these contaminants, the person wears a face mask and breathes through a filter canister attached to the face mask. As the person inhales, the contaminated air is drawn into the filter canister where it passes through a filter arrangement which purifies the air.

Although previous filter canisters have proven a highly effective and reliable means for protecting against airborne contaminants, they nonetheless have several problems. For example, many filter canisters contain a bed of sorbent material, such as a bed of activated carbon, for removing vaporous chemical contaminants. Unfortunately, the effectiveness of the sorbent bed may be exhausted long

0159698

before the end of the useful life of the remainder of the canister, or the particular type of sorbent material may prove not to be the optimum sorbent material for the particular contaminants encountered. The entire canister must then be replaced in order to obtain a more effective sorbent bed.

Another problem with previous filter canister is that they may accumulate fluids when oriented in certain positions. For example, a person who is using a respiratory device and ist injured may need to lie horizontally, yet many canisters accumulate fluids in that position. If a canister accumulates fluid in a position the person must assume for an extended period of time, the accumulated fluid may partially or even completely block the filter which would increase the resistance to airflow, making it difficult if not impossible for the person to breathe. Labored breathing contributes to the onset of fatigue as well as psychological discomfort.

Accumulated fluids also increase the weight of the filter canister, which decreases the amount of time a person can comfortably wear the respiratory device and further hastens the onset of fatigue. Also, because of the cantilever effect of a filter canister extending from the face mask, increased weight due to fluid accumulation in the canister places more stress on the seal between the mask and the face, which can compromise the integrity of the seal. This is especially true when the person wearing the respiratory device moves quickly, as in running. The increased weight also places more stress on the fitting between the face mask and the filter canister, which can crack the fitting or otherwise jeopardize the structural integrity of the respiratory device.

Disclosure of Invention:

A general object of the present invention is to provide an improved filter canister. Specific objects include providing a filter canister in which the sorbent bed may be readily replaced without having to replance the entire filter canister and which drains fluids regardless of the orientation of the filter canister.

Accordingly, the present invention encompasses a filter canister comprising a generally cylindrical housing and at least first and second filter assemblies. The housing includes an air inlet, an air outlet, and an airflow path between them. The first and second filter assemblies are disposed within the housing in the airflow path with the first filter assembly upstream from the second filter assembly. The first filter assembly has an annular cross section to allow air to flow radially through the assembly. The second filter assembly is cylindrical and disposed inside the first filter assembly to allow air to flow axially through the assembly. The first filter assembly includes a porous structure for filtering particulates, aerosols and other fine particles from the air, and the second filter assembly includes a sorbent-containing structure for removing vaporous chemical contaminants from the air.

According to one of several aspects of the invention, the filter canister may be designed so that the second filter assembly is replaceable, the housing including a detachable structure which allows access to the second filter assembly. According to another aspect of the invention, the filter canister may include apertures that are positioned in the housing surrounding the annular first filter assembly to allow drainage of fluids, preventing the accumulation of fluids regardless of canister orientation.

The present invention realizes each of the objectives stated above while permitting ease and reliability in manufacturing. Further objects, aspects, and advantages of the present invention will become apparent upon studying the following detailed description and the accompanying drawings of an exemplary embodiment of the invention.

Drawings:

In the accompanying drawings:

Fig. 1 is a sectional side view of an embodiment of the filter canister of the invention;

Fig. 2 is a partial sectional front view of the filter canister of Fig. 1 as viewed along lines 2-2; and

Fig. 3 is a partial side view of the filter canister of Fig. 1.

Detailed Explanation of an Embodiment:

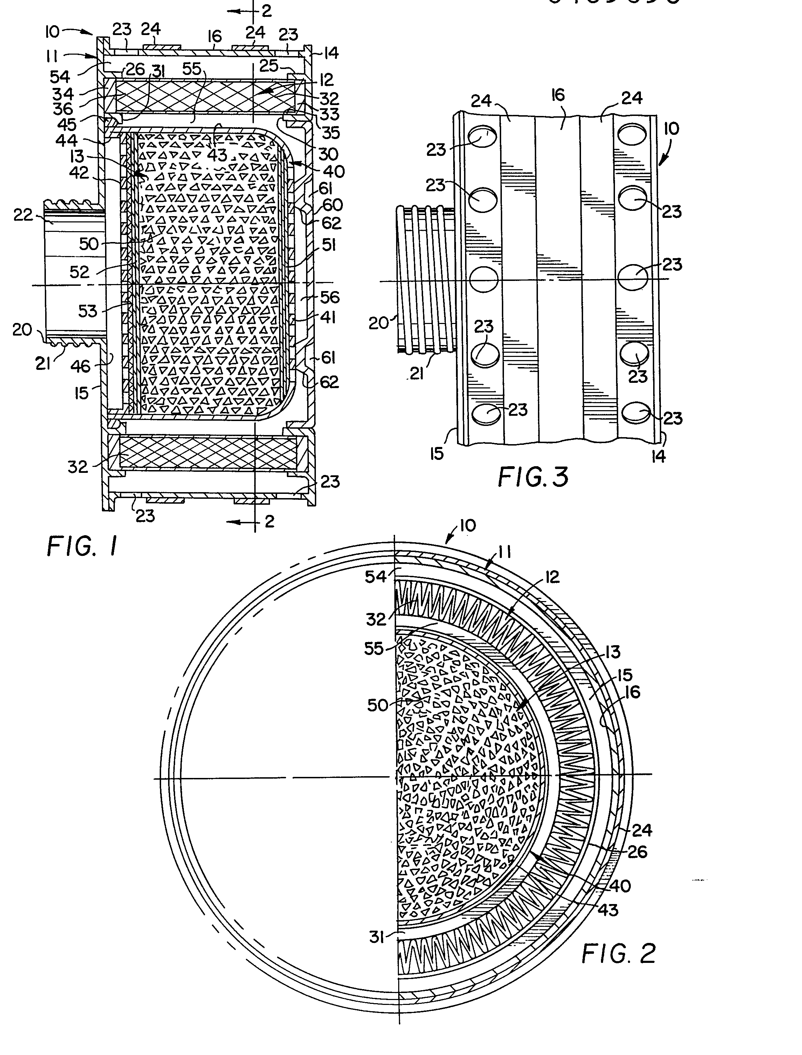

As shown in Figs. 1-3, an exemplary embodiment of the filter canister 10 of the present invention comprises a generally cylindrical housing 11 containing an annular particulate/aerosol filter assembly 12 and a cylindrical sorbent bed filter assembly 13. The housing 11, which is preferably fabricated from plastic or from sheet metal that may be suitably coated to render it nonconductive if desired, comprises a front wall 14, a rear wall 15 and a cylindrical side wall 16. The rear wall 15 includes a cylindrical protrusion 20 with external threads 21 which allow the canister 10 to be threaded into a fitting in the face mask (not shown); however, any convenient mechanism for attaching the canister 10 to the mask could be used. The cylindrical protrusion 20 also contains a rear aperture 22 which serves as an air outlet. Apertures 23 evenly distributed along the side wall 16 serve as air inlets. Although the inlet apertures could alternatively be located in the front and rear walls 14, 15, they should be positioned, according to one aspekt of the invention, to allow drainage of accumulated fluids regardless of canister orientation. Axially sliding straps 24, which extend circumferentially around the cylindrical side wall 16, may be provided for use in temporarily covering the inlet apertures 23 to test the integrity of the filter canister 10 and the seals between the canister 10 and the face mask and between the face mask and the face.

The annular particulate/aerosol filter assembly 12 is disposed within and coaxial to the housing 11 between spaced pairs of opposed annular ribs 25, 26, 30, 31. To remove particulates, aerosols, microorganisms and other fine particles, the filter assembly 12 comprises a pleated filter element 32 fashioned from a microfibrous medium (i.e., a medium of fibers which diameters typically range from about 0.5 to 20 micrometers). The filter assembly 12 can, however, comprise any appropriately configured and suitably porous element, e.g., a microporous polymeric membrane such as PTFE or Nylon 66. The medium may include an integral substrate, such as a non-woven polyester, which would permit the filter element 32 to stand alone, eliminating the need for heavy and bulky external supports and significantly increasing the volume available for the filter element 32 itself. Alternatively, a thin bead of hot, melted thermoplastic resin may be deposited on the surface of the filter medium so that when the medium is pleated, the thermoplastic resin bonds the pleats together, providing the integral structural support which permits the filter element 32 to stand alone.

A variety of microfibrous media are suitable for use in the filter element 32, including a microfibrous glass fiber filter medium with uniform pores, a microfibrous glass fiber filter medium with graduated pores, e.g., having an upstream layer with larger pores which serves as a coarse filter and a downstream layer with smaller pores which serves as a finer filter, or a filter medium comprising the combination of a microfibrous glass fiber layer upstream from a microfibrous electret (i.e., a microfibrous material capable of maintaining a static electric charge). The glass fiber filter media may include a suitable binder and may be treated to be both hydrophobic and oleophobic, i.e., to resist wetting by water and oil-based compositions, respectively, and thereby resist fouling by water and oil

0159698

aerosols. For example, a fluoro-chemical treatment, similar to that described in issued United States Patent No. 4,508,775 to Joseph G. Adiletta for Gas Permeable Composite Structures, may be applied to the glass fibers.

The particulate/aerosol filter assembly 12 also comprises planar front and rear end seals 33, 34 which are positively sealed to the front and rear walls 14, 15, respectively, of the housing 11 and to the planar front and rear ends 35, 36, respectively, of the filter element 32. For example, the front and rear end seals 33, 34 may be heat-melt sealed to the ends 35, 36 of the filter element 32. Heat-melt sealing as disclosed in Pall et al. United States Patent No. 3,457,339 is a particularly easy and reliable method of sealing.

The sorbent bed filter assembly 13 is disposed within and coaxial to the annular particulate/aerosol filter assembly 12 and includes a generally cylindrical casing 40 containing a sorbent bed. The casing 40 includes perforated front and rear ends 41, 42 and an impervious side wall 43 with a peripheral lip 44 which extends axially from the perforated rear end 42. According to one aspect of the invention, the sorbent bed filter assembly 13 ist removably attached to the housing 11. Although any convenient mechanism for attaching the filter assembly 13 could be used, in the illustrated embodiment the lip 44 of the casing 40 frictionally engages an O-ring 45 carried by the rear inner rib 31 to removably seal the sorbent bed filter assembly 13 in place. As shown, the lip 44 abuts the rear wall 15 of the housing 11 to maintain a rear space 46 between the rear wall 15 and the rear end 42 of the casing 40.

To remove vaporous chemical contaminants, the sorbent bed filter assembly 13 comprises a compressively-loaded loose bed 50 of activated carbon particles, preferably of a particle size such as passing a mesh size of from 0.54 to 1.40 mm (12 x 30 mesh U.S. Sieve Series). However, the bed could be fashioned from any suitable sorbent material, i.e., a material which absorbs or adsorbs vaporous chemical contaminants, such as activated alumina, ion exchange resins, or molecular sieves. The sorbent bed 50 is disposed between front and rear fines filters 51, 52 to prevent upstream or downstream migration of sorbent fines. According to one aspect of the invention, a sorbent dust filter 53 is disposed downstream from the rear fines filter 52 to prevent the inhalation of sorbent dust (i.e., sorbent particles as small as one micron), which may itself be toxic or carcinogenic or may contain toxic contaminants. The sorbent dust filter 53 can be fashioned from a microfibrous electret which would have a low resistance to airflow compared to other filters capable of filtering such fine particles. For larger dust particles, a non-electret microfibrous medium may be preferable. The edge of the sorbent dust filter 53, as well as the edges of the front and rear fines filters 51, 52, are positively sealed to the side wall 43 of the casing 40 to prevent bypass. The front and rear perforated ends 41, 42 of the casing 40 maintain the sorbent bed 50 and the front and rear fines filters 51, 52 under compression to prevent settling and channeling of the bed 50.

While the sorbent bed filter assembly 13 of the illustrated embodiment comprises a compressively-loaded loose sorbent particle bed 50, the filter assembly 13 could comprise any appropriately configured sorbent bed, e.g., an immobilized sorbent particle bed, fashioned from a suitable sorbent material. For example, the sorbent bed may comprise a bed of binder-immobilized sorbent particles in which sorbent particles such as carbon particles are mixed with a suitable polymeric binding material, such as a powdered polyethylene. The mixture is heated and compressed to the solid-liquid transition stage of the binding material, yielding a binder-immobilized sorbent particle bed once the mixture cools. This process for immobilizing sorbent particles in a sorbent particle/binding material mixture is described in co-pending European patent application of Pall Corporation, naming as investors Mssrs. Degen and Gsell, entitled "Self-Supporting Structure Containing Immobilized Carbon Particles and Method for Forming Same" filed on April 23, 1985 (a copy thereof is enclosed). Alternatively, the sorbent bed may comprise a bed of fiber-immobilized sorbent particles in which sorbent particles are dispersed into a microfibrous medium.

The immobilized sorbent bed has certain advantages compared to the loose sorbent bed 50. For example, since the sorbent particles are bound within an immobilized sorbent particle bed, settling, channeling, and dusting of the bed due to shock or vibration are minimized, which can reduce the quantity and therefore the weight of sorbent required because less of a safety factor is needed to account for settling and channeling. Further, since there are no loose sorbent particles and since the filter medium would be self-supporting, the front and rear fines filters 51, 52 and the perforated front and rear ends 41, 42 associated with the loose sorbent particle bed 50 may be eliminated. Eliminating these components facilitates production of the filter canister 10 and further reduces the weight and size of the filter canister 10. Although dusting is minimized in the immobilized sorbent bed, the downstream sorbent dust filter 53 may be retained if desired. For example, the sorbent dust filter 53 could be integrally laminated to the downstream side of a fiber-immobilized sorbent particle bed.

In operation, the filter canister 10 of the illustrated embodiment is first threaded onto a face mask. During inhalation, contaminated air enters the filter canister 10 and, according to one aspect of the invention, passes radially through the particulate/aerosol filter assembly 12 and passes axially through the sorbent bed filter assembly 13 which purifies the air. The purified air then exits the filter canister 10 into the face mask. Specifically, contaminated air is drawn radially into the filter canister 10 through the side apertures 23, where it enters an outer chamber 54 defined by the outside surface of the pleated filter element 32 and the cylindrical side wall 16 of the housing 11. From the outer chamber 54, the contaminated air is drawn radially inward through the pleated filter element 32, which removes particulates and aerosols such as oil and water aerosols.

As the aerosols coalesce on the pleated filter element 32, the resulting liquid drains from the outer surface of the filter element 32 through the apertures 23 in the cylindrical side wall 16 of the housing 11. Since the apertures 23 are distributed evenly along the cylindrical side wall 16, the liquid drains from the filter canister 10, according to one aspect of the invention, regardless of canister orientation. This drainage system avoids partial or complete blockage of the filter element 32 by accumulation of liquid. It also reduces the effective weight of the filter canister 10, since the wearer does not have to carry any significant amount of accumulated liquid.

From the pleated filter element 32, the contaminated air passes into an annular inner chamber 55 defined by the inside surface of the pleated filter element 32 and the side wall 43 of the casing 40 and then flows into a front space 56 defined by the perforated front end 41 of the casing 40 and the front wall 14 of the housing 11. From the front space 56, the contaminated air passes axially through the perforated front end 41, through the front fines filter 51, and into the sorbent bed 50, where any harmful or noxious vaporous chemical contaminants are removed. From the sorbent bed 50, the air passes axially first through the rear fines filter 52 and then through the sorbent dust filter 53, which, according to one aspect of the invention, removes any sorbent dust that the air may have acquired in the sorbent bed 50. The air, which is now purified, then passes axially through the perforated rear end 42 of the casing 40 into the rear space 46 and exits the filter canister 10 through the rear aperture 22 into the face mask.

According to one aspect of the invention, once the sorbent bed 50 becomes saturated with chemical contaminants after prolonged use or if a sorbent bed containing a different type of sorbent material is desired, the cylindrical sorbent bed filter assembly 13 may be replaced. To this end, the front wall 14 of the housing 11 includes a removable cover 60 which is threaded to the front inner rib 30 and may be unscrewed from the front wall 14 by means of indentations 61 in the cover 60. The cylindrical sorbent bed filter assembly 13 may then be removed from its frictional engagement with the O-ring 45, a new one inserted, and the cover 60 screwed back in place. Spacers 62 protruding from the removable cover 60 not only maintain an appropriate distance between the removable cover 60 and the front end 42 of the casing 40, but also secure the sorbent bed filter assembly 13 to the housing 11. A suitable thread sealant or other sealing technique (e.g., an O-ring) may be used to ensure a secure seal between the cover 60 and the remainder of the housing 11.

0159698

Claims:

1. A filter canister for removing undesirable substances
from a breathable gas,
said filter canister comprising a cylindrical housing
having a gas inlet, a gas outlet and a gas flow path
therebetween;
first and second cylindrical filter assemblies disposed
within the housing in the gas flow path with the first
filter assembly disposed upstream from the second
filter assembly;
said first filter assembly having an annular cross-
section and including a porous means for removing
particles from the gas;
said second filter assembly disposed coaxially to the
first filter assembly and including a sorbent
containing means for removing vaporous chemical
contaminants from the gas; and
means for directing the gas flow radially through the
first filter assembly and axially through the second
filter assembly.

2. The filter canister according to claim 1,
wherein the second filter assembly has a generally
circular cross-section and is disposed within the
annular first filter assembly; and
wherein the directing means includes means for guiding
the gas flow radially inwardly through the first filter
assembly.

3. The filter canister according to claim 1 or 2,
wherein the porous means includes a pleated
microfibrous filter.

4. The filter canister according to claim 1 or 2,
wherein the porous means includes a microporous
polymeric membrane.

5. The filter canister according to anyone of the claims 1 to 4,
wherein the porous means comprises a filter medium having non-fouling properties for both liquid water and oil.

6. The filter canister according to anyone of the claims 1 to 5,
wherein the porous means comprises a filter medium including microfibrous glass fibers.

7. The filter canister according to anyone of the claims 1 to 6,
wherein the filter medium further comprises an integral means for supporting the filter.

8. The filter canister according to anyone of the claims 1 to 7,
wherein the second filter assembly further includes a sorbent dust filter means for removing sorbent particles as small as one micrometer from the gas, said sorbent dust filter means disposed downstream from the sorbent-containing means.

9. The filter canister according to anyone of the claims 1 to 8,
wherein the sorbent containing means includes a bed of compressively-loaded loose sorbent particles.

10. The filter canister according to anyone of the claims 1 to 8,
wherein the sorbent-containing means includes a bed of immobilized sorbent particles.

11. The filter canister according to claim 10,
wherein the bed of immobilized sorbent particles comprises a mixture of polymeric binding material and sorbent particles.

12. The filter canister according to claim 11,
wherein the sorbent particles comprise carbon particles
and the polymeric binding material comprises powdered
polyethylene.

13. The filter canister according to claim 10,
wherein the bed of immobilized sorbent particles
comprises a bed of fiber-immobilized sorbent
particles.

14. The filter canister according to anyone of the claims 1
to 13,
wherein the housing includes a first portion; and
wherein the filter canister further comprises aperture
means in the first portion for preventing the
collection of liquids upstream from the first filter
assembly regardless of canister orientation

15. The filter canister according to anyone of the claims 1
to 14,
wherein the second filter assembly is removably mounted
to the housing; and
wherein the housing includes a detachable means for
allowing access to the second filter assembly.

0159698

FIG. I

FIG. 3

FIG. 2